Europäisches Patentamt

European Patent Office

Office européen des brevets

(11) Numéro de publication: **0 314 548**
**A2**

(12) **DEMANDE DE BREVET EUROPEEN**

(21) Numéro de dépôt: **88402649.3**

(22) Date de dépôt: **20.10.88**

(51) Int. Cl.⁴: **E 04 B 1/66**
**B 29 C 65/36**

(30) Priorité: **27.10.87 FR 8714853**

(43) Date de publication de la demande:
**03.05.89 Bulletin 89/18**

(84) Etats contractants désignés:
**BE CH DE ES FR GB IT LI LU NL SE**

(71) Demandeur: **GERLAND ETANCHEITE S.A.**
**21, square Saint-Charles**
**F-75583 Paris Cedex 12 (FR)**

(72) Inventeur: **Huygen, Patrice**
**Avenue des Poilus Lambres Les Douai**
**F-59500 Douai (FR)**

**Laurent, Maurice Henri Jean**
**16, rue A. Messager**
**F-59400 Cambrai (FR)**

(74) Mandataire: **Bugnon-Hays, Claudine**
**PATCO S.A. 10, rue Vivienne**
**F-75002 Paris (FR)**

(54) **Chape d'étanchéité, procédé de raccordement ou de fixation d'une telle chape et dispositif pour la mise en oeuvre des procédés.**

(57) La présente invention concerne une chape d'étanchéité comportant au moins une couche extérieure de matériau thermofusible dans laquelle est incorporé superficiellement un matériau conducteur divisé.

Elle concerne également un procédé de fixation sur un support et de raccordement avec une autre chape d'étanchéité d'une chape d'étanchéité comportant une couche extérieure d'un matériau thermofusible chargé par un conducteur divisé.

Elle concerne également un dispositif soudeur comportant un générateur haute fréquence et une bobine d'induction ainsi que des moyens d'asservissement de la vitesse de déplacement.

Applications: étanchéité de terrasses, toitures, bassins, tunnels.

EP 0 314 548 A2

Bundesdruckerei Berlin

## Description

## Chape d'étanchéité, procédé de raccordement ou de fixation d'une telle chape et dispositif pour la mise en oeuvre des procédés

La présente invention concerne une chape d'étanchéité comportant au moins une couche extérieure constituée d'un matériau thermofusible, ainsi qu'un procédé de raccordement d'une telle chape avec une autre chape d'étanchéité, un procédé de fixation d'une telle chape sur un support et un dispositif pour la mise en oeuvre des procédés.

Les chapes d'étanchéité faisant l'objet de la présente invention sont destinées à assurer l'étanchéité des toitures, terrasses, parkings, ouvrages enterrés, bassins, galeries ou tunnels.

Ces ouvrages sont généralement réalisés en maçonnerie, béton, bois ou acier.

Les chapes d'étanchéité de type connu sont constituées de feuilles monocouche ou multicouches constituées à base de bitume, PVC, bitume modifié par adjonction de charges caoutchouc ou autres matières organiques ou de matière plastique. Elles peuvent être recouvertes de charges minérales ou de couches de matériaux divers facilitant la pose et améliorant l'aspect extérieur. Elles peuvent en outre comporter une armature en polyester, en fibres de verre ou en d'autres matériaux améliorant la résistance mécanique.

Les chapes d'étanchéité sont habituellement conditionnées pour le stockage, le transport et la mise en place, sous forme de rouleaux. Pour réaliser l'étanchéité d'un ouvrage de grandes dimensions, on assemble plusieurs chapes d'étanchéité se recouvrant partiellement. La jonction de deux chapes se recouvrant est effectuée sur le chantier par un ouvrier, à l'aide d'un chalumeau. La chape bitumineuse comprend un film thermofusible qui est chauffé jusqu'à sa fusion. Le chauffage régulier et homogène des zones de soudure n'est pas toujours assuré en raison du grand soin et de l'attention continue qu'impose ce travail. Il nécessite, en particulier, un déroulage et une pose de la chape au fur et à mesure de la soudure des zones de raccordement, ce qui est extrêmement fastidieux, particuliè-rement lorsque les surfaces à étanchéifier sont importantes, irrégulières ou déformées.

De même, la fixation d'une telle chape sur l'ouvrage s'effectue en chauffant la surface inférieure de la chape pendant que l'on déroule le rouleau. Il va sans dire qu'il est très difficile de réaliser cette opération sur un chantier de fa on suffisamment régulière pour que l'ensemble de la chape soit fixé correctement sur le support sans que celle-ci ne soit dégradée par un échauffement localement excessif.

On connaît également des techniques de collage à chaud ou à froid ne remédiant pas totalement à ces inconvénients.

A ce jour, aucun des procédés connu dans l'état de la technique n'assure une garantie suffisante de la qualité du raccordement et de la fixation de la chape. Il arrive en particulier fréquemment que des zones de raccordement plus ou moins importantes comportent des lacunes se traduisant par des fuites et des pertes d'étanchéité.

L'humidité ou l'eau peuvent ainsi pénétrer sous la chape d'étanchéité et dégrader de façon préjudiciable l'ouvrage censé être protégé.

Le brevet suisse 423 208 décrit par ailleurs un procédé de fabrication de moyens d'étanchéité d'un ouvrage constitué de bandes de matière plastique, consistant à introduire entre deux bandes se recouvrant partiellement une bande de métal chauffée par un courant haute fréquence. La bande de métal est constituée par une feuille d'aluminium de largeur et d'épaisseur adéquates.

Les résultats obtenus avec ce procédé ne sont pas totalement satisfaisants. La présence d'une bande de métal continue entre les deux surfaces des chapes d'étanchéité à raccorder empêche la formation d'une interface de jonction homogène. Les couches thermofusibles des deux chapes d'étanchéité ne fusionnent pas entre elles mais adhèrent de façon plus ou moins satisfaisante sur la bande de métal continue intercalaire. Or il est connu que l'adhèrence d'une matière plastique sur une feuille d'aluminium n'est pas totalement satisfaisante et se dégrade rapidement. Elle n'est donc pas compatible avec la tenue dans le temps requise pour la construction d'ouvrages.

Cette bande intercalaire de métal constitue une barrière chimique interdisant toute migration de composantes d'une chape d'étanchéité, mettant en oeuvre des matériaux de type PVC ou équivalent, à l'autre. Or ces chapes d'étanchéité sont constituées de complexes alliant, en particulier, des bitumes et des matières plastiques. De ce fait, il se produit une migration de certaines des composantes dans l'épaisseur des couches thermofusibles. La présence d'une barrière parfaitement étanche à ces composants chimiques provoque une concentration excessive au niveau de la jonction entre la chape d'étanchéité et la bande de métal. Cette concentration altère de façon importante les caractéristiques physiques et chimiques de la jonction. Cela peut se traduire par un décollage de la bande de métal entraînant une perte de l'étanchéité au niveau du raccordement.

La demande de brevet allemand 28 51 612 (BOLDT) concerne un procédé de soudure de matières plastiques destiné à la construction. Ce procédé consiste à intercaler entre les deux matériaux à raccorder un cordon constitué par un alliage d'un matériau thermofusible et d'un métal. Ce cordon est échauffé par des moyens électriques provoquant la fusion du matériau thermofusible le constituant. Ce procédé est à rapprocher d'une colle à chaud.

L'introduction d'un cordon thermofusible entre les surfaces à raccorder ne permet pas d'obtenir une homogénéité chimique. Par ailleurs, ce ne sont pas les couches superficielles thermofusibles des chapes d'étanchéité qui fondent et se mélangent mais le matériau thermofusible constituant le cordon qui assure donc simplement un collage.

La mise en place d'un tel cordon au moment de la pose des chapes d'étanchéité sur l'ouvrage n'est pas envisageable pratiquement. En effet, en raison du poids des rouleaux, des inégalités de surface du support et des conditions matérielles de travail, il est impossible à l'ouvrier chargé de ce travail de mettre en place de façon suffisamment précise ce cordon afin d'obtenir un collage régulier des zones de raccordement.

La présente invention a pour objet une chape d'étanchéité pouvant être raccordée à un support ou à une autre chape d'étanchéité, de façon extrêmement fiable, avec des moyens et des méthodes rustiques compatibles avec un travail sur un chantier.

La présente invention concerne plus particulièrement une chape d'étanchéité comportant au moins une couche extérieure constituée d'un matériau thermofusible. La couche extérieure comporte un matériau conducteur divisé, incorporé en dispersion dans la couche superficielle du matériau thermofusible. Par matériau divisé, on entend un matériau qui n'est pas constitué par un film continu et plein. Il peut s'agir de poudres, granulés ou fibres.

Le matériau conducteur divisé permet de provoquer un échauffement très localisé du matériau thermofusible au niveau de la jonction de la chape d'étanchéité avec un support ou une autre chape d'étanchéité. La structure non continue du matériau conducteur empêche la formation d'un barrage chimique ou physique. Lorsque la chape d'étanchéité selon la présente invention est recouverte par une autre chape d'étanchéité comportant une couche extérieure thermofusible, l'échauffement localisé provoqué par l'absorption du courant haute fréquence par les particules ou le matériau divisé assure une fusion parfaite des deux surfaces extérieures en contact. La jonction est ainsi parfaitement homogène et perméable aux composants chimiques migrant à travers l'épaisseur des chapes d'étanchéité. Lorsque la chape d'étanchéité est destinée à être fixée sur un support, par exemple en maçonnerie, l'échauffement localisé des particules ou du réseau conducteur assure une fusion homogène et régulière de la couche thermofusible, au niveau de la jonction et permet d'obtenir une fixation régulière et homogène.

Par ailleurs, contrairement aux techniques habituelles mettant en oeuvre des moyens de chauffage tels que des chalumeaux, la totalité des chapes d'étanchéité peut être mise en place sur un support avant le passage de l'inducteur provoquant la soudure des chapes entre elles.

Selon un mode de réalisation préféré, le matériau conducteur est constitué de particules d'une dimension comprise entre 100 et 1000 micromètres. La distance moyenne entre deux particules est préférablement inférieure à 300 micromètres. La concentration en volume du matériau conducteur divisé en dispersion dans le matériau thermofusible est préférablement compris entre 50 et 75 %.

La demanderesse a mis en évidence qu'une densité trop élevée de particules métalliques peut provoquer un échauffement trop brutal de la zone de jonction entraînant dans certains cas une dégradation des qualités physicochimiques du matériau thermofusible lorsque le générateur haute-fréquence est statique. A l'opposé, lorsque la concentration de matériau conducteur est trop faible, la quantité de chaleur transmise par les particules métalliques au matériau thermofusible environnant est insuffisante pour réaliser une fusion homogène de la couche superficielle. La chaleur provoque, au contraire, un échauffement généralisé de la chape d'étanchéité par convexion dans l'épaisseur du matériau.

Selon une variante de la présente invention, le matériau conducteur divisé est incorporé superficiellement dans une bande latérale de la couche de matériau thermofusible. Le raccordement de deux chapes se fait par recouvrement d'une des chapes avec ladite bande latérale chargée de matériau conducteur divisé et par échauffement par induction haute fréquence de cette zone de raccordement. On évite ainsi de provoquer la fusion du matériau thermofusible en dehors de la zone de raccordement.

La présente invention concerne également un procédé de raccordement d'une première chape d'étanchéité du type comportant au moins une couche extérieure d'un matériau thermofusible dans laquelle est incorporé superficiellement un matériau conducteur divisé avec une deuxième chape d'étanchéité comportant au moins une couche extérieure d'un matériau thermofusible, la première et la seconde chape se recouvrant partiellement, consistant à provoquer l'échauffement du matériau conducteur divisé par application d'un champ haute fréquence à l'aide d'un générateur déplaoé à proximité de la surface de la chape d'étanchéité extérieure, au niveau des zones de recouvrement.

La deuxième chape d'étanchéité peut être soit d'un type identique à la première chape d'étanchéité, soit d'un type simplifié comportant une couche thermofusible non chargée de particules métalliques.

La présente invention concerne également un procédé de fixation, sur un support, d'une chape d'étanchéité du type comportant une couche extérieure de matériau thermofusible chargé par un matériau conducteur divisé incorporé superficiellement, consistant à disposer la couche du matériau thermofusible chargé contre le support et à provoquer l'échauffement du matériau conducteur par induction d'un courant haute fréquence.

Ce procédé évite l'emploi de colles coûteuses et parfois difficiles à mettre en oeuvre. Le procédé selon la présente invention permet au contraire de mettre en place les chapes d'étanchéité, éventuellement d'ajuster leurs dispositions et d'assurer ensuite seulement la fixation sur le support par utilisation d'un générateur de champ haute fréquence.

Selon une variante préférée, on asservit la vitesse de déplacement du générateur de champ haute fréquence à la puissance absorbée. Cet asservissement peut se faire soit manuellement par un ouvrier déplaçant plus ou moins rapidement le générateur en fonction des indications d'un instrument visualisant la puissance absorbée, par exemple une série de voyants lumineux ou un cadran, soit automatiquement. Dans ce dernier cas, le générateur de champ haute fréquence comporte un capteur destiné à la mesure de la puissance rayonnée, délivrant un signal à un comparateur commandant des moyens de contrôle de la vitesse de déplacement du système de soudure. Il est ainsi possible, même pour un personnel non qualifié de réaliser un raccordement de deux chapes ou une soudure d'une chape sur un support de façon optimale, sans provoquer ni d'échauffement excessif ni de fusion insuffisante pour assurer une fixation.

La présente invention concerne également un dispositif soudeur de chapes d'étanchéité pour la fixation sur un support ou le raccordement avec une chape d'étanchéité comportant une couche extérieure de matériau thermofusible, d'une chape d'étanchéité comportant une couche extérieure de matériau thermofusible chargé par un matériau conducteur divisé incorporé superficiellement dans ledit matériau thermofusible, caractérisé en ce qu'il comporte un générateur de courant et un inducteur, par exemple une bobine ou un solénoïde.

Selon un mode de réalisation préféré, le dispositif soudeur comporte en outre un capteur disposé à proximité d'un inducteur délivrant un signal électrique à un comparateur électronique, ledit comparateur électronique délivrant un signal de commande à un circuit de contrôle de la vitesse de déplacement du dispositif soudeur, dépendant d'une part du signal délivré par le capteur, d'autre part de la puissance délivrée par le générateur haute fréquence.

D'autres avantages et modes de réalisation ressortiront mieux de la description qui va suivre s'appuyant sur les dessins où :

    - la figure 1 représente une vue en perspective de la zone de raccordement de deux chapes d'étanchéité selon une variante de la présente invention,

    - la figure 2 représente schématiquement les circuits du dispositif soudeur.

Les chapes d'étanchéité sont habituellement constituées d'une ou plusieurs couches de matériaux, généralement bitumineux, formant un tapis allongé enroulé sur un rouleau pendant le stockage. Les matériaux employés sont habituellement à base de bitume, de PVC, éventuellement modifié par l'adjonction de charges caoutchouc ou autres matières organiques ou encore à base d'EPDM-butil ou de matière plastique. Ces chapes d'étanchéité peuvent être revêtues de granulés minéraux, de silice en poudre, de talc, d'un film polypropylène ou de tout autre matériau habituellement utilisé pour éviter le collage de deux spires consécutives par temps chaud.

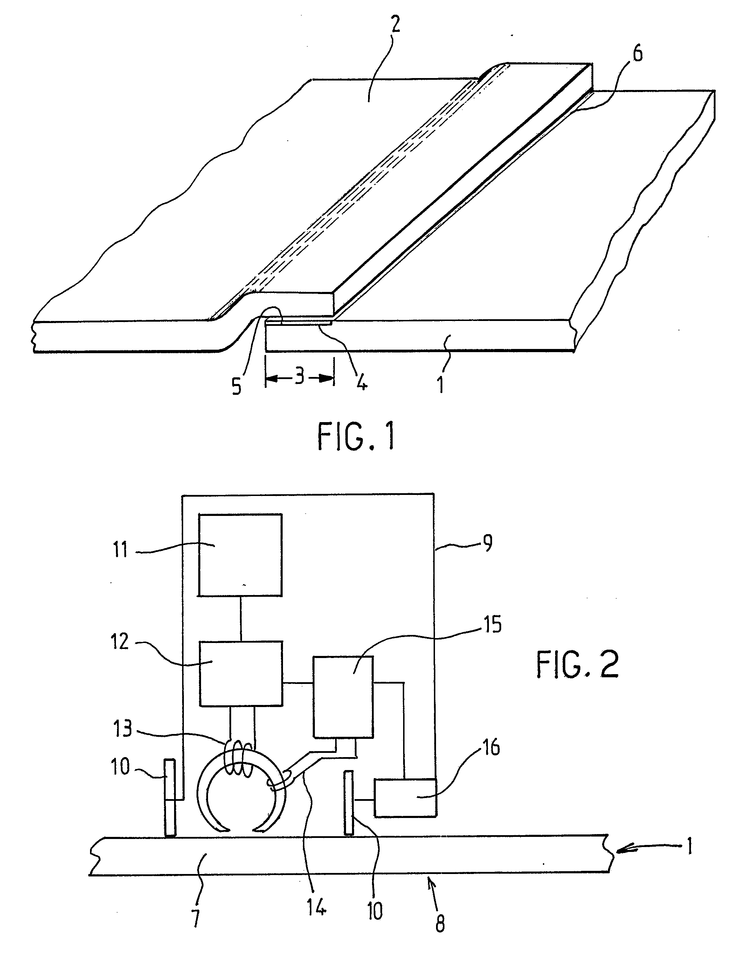

La figure 1 représente un exemple de réalisation d'une chape d'étanchéité selon la présente invention. La première chape (1) et la seconde chape (2) se recouvrent au niveau d'une zone de soudure (3). La première chape (1) comporte une bande latérale de soudure (4) constituée d'un matériau thermofusible (5) chargé par un matériau conducteur divisé. La deuxième chape d'étanchéité (2) comporte également une bande latérale de soudure (6), de même nature que la bande de soudure (4) de la première chape d'étanchéité. Il va de soi que la deuxième chape peut ne pas être chargée.

En déplaçant un générateur de champ d'induction à haute fréquence à proximité de la zone de soudure (3), le matériau conducteur divisé incorporé dans les deux bandes de soudure (4, 6) est soumis à un champ électro-magnétique provoquant l'échauffement du matériau thermofusible environnant. L'élévation de température provoquera le ramollissement ainsi que la fusion des matériaux thermofusibles et entraînera une soudure régulière des deux chapes d'étanchéité (1), (2).

Les matériaux conducteurs incorporés superficiellement dans les bandes de soudure (4), (6), sont constitués de poudres ou de granulés de carbone, de graphite ou de métal.

A titre d'exemple, on a réalisé une chape d'étanchéité de bitume élastomère SBS armé d'un non tissé polyester et d'un voile de verre d'une épaisseur de 4 mm. La face supérieure est revêtue de paillettes d'ardoises afin d'éviter le collage de deux spires consécutives lorsqu'elle est stockée en rouleau.

La chape d'étanchéité selon cet exemple comporte une zone de soudure constituée par une couche superficielle de bitume élastomère dont le point de ramollissement est de 120°. Le bitume élastomère est dopé superficiellement par des particules d'aluminium d'un diamètre moyen de 500 micromètres. L'espace inter-particulaire moyen est de l'ordre de 200 micromètres et la concentration des particules conductrices est de l'ordre de $4 \times 10$ puissance 6 particules par mètre cube. On peut obtenir une soudure satisfaisante à l'aide d'un générateur haute fréquence d'une puissance de l'ordre de 50 kilowatts permettant d'assurer un raccordement d'une surface de raccordement d'environ un mètre carré avec une vitesse de déplacement d'un mètre par minute. Les particules métalliques sont incorporées dans la couche superficielle de bitume élastomère avant son refroidissement par sablage.

On a pu observer que la zone de raccordement présente une homogénéité physico-chimique parfaite.

Selon un autre exemple, les particules de matériau conducteur divisé ont été incorporés avec une concentration plus élevée de l'ordre de $2 \times 10$ puissance 7 particules d'un diamètre moyen de 500 micromètres et avec un espace interparticulaire moyen de 2 micromètres.

La fusion nécessite une puissance nettement inférieure de l'ordre d'un kilowatt.

La figure 2 représente un dispositif soudeur pour le raccordement de deux chapes entre elles ou la fixation d'une chape sur un support.

La chape d'étanchéité (1) comporte une couche superficielle (7) constituée par un matériau thermofusible chargé par des particules conductrices. La chape (1) est posée sur un support (8), par exemple en maçonnerie. Le dispositif soudeur comporte un bâti (9) mobile monté sur des roulettes (10). Le dispositif soudeur comporte un oscillateur haute fréquence (11) alimentant un amplificateur haute fréquence (12). L'amplificateur haute fréquence (12) alimente une bobine (13) créant un champ d'induction haute fréquence. A proximité de l'inducteur haute fréquence (13), est disposé un capteur (14) délivrant un signal variant avec la puissance absorbée par les particules conductrices de la couche chargée (7) à un comparateur (15). Ce comparateur (15) reçoit également un signal délivré par l'amplificateur haute fréquence (12). Le comparateur (15) génère un signal de commande en fonction d'une part de la puissance délivrée par l'amplificateur haute fréquence et, d'autre part, de la puissance absorbée mesurée par le capteur (14). Ce signal de commande régule la vitesse d'un moteur (16) assurant le déplacement du bâti (9).

Il est bien entendu que la présente invention n'est pas limitée à l'exemple de chapes d'étanchéité et à l'exemple de dispositif soudeur décrit. En particulier, la géométrie et la composition de la couche superficielle chargée de matériau conducteur divisé peut varier dans de larges proportions sans sortir du cadre de l'invention. En particulier, cette couche peut être constituée soit par un matériau rapporté sur le matériau constitutif de la chape, soit par dopage avec un matériau conducteur divisé d'une faible épaisseur de la surface d'une chape d'étanchéité homogène.

De même, le dispositif soudeur peut être réalisé sous de multiples formes faisant appel à des circuits et des moyens connus dans l'état de l'art.

## Revendications

1) Chape d'étanchéité comportant au moins une couche extérieure de matériau thermofusible caractérisée en ce qu'un matériau conducteur divisé est incorporé superficiellement dans ledit matériau thermofusible.

2) Chape d'étanchéité selon la revendication 1 caractérisée en ce que le matériau conducteur est constitué par des particules d'une dimension comprise entre 100 et 1000 micromètres.

3) Chape d'étanchéité selon l'une quelconque des revendications 1 à 2 caractérisée en ce que le matériau conducteur est constitué de particules en dispersion, la distance moyenne entre deux particules étant inférieure à 300 micromètres.

4) Chape d'étanchéité selon l'une quelconque des revendications 1 à 3 caractérisée en ce que la concentration en volume de matériau conducteur divisé en dispersion dans le matériau thermofusible est compris entre 50 et 75 %.

5) Chape d'étanchéité selon l'une quelconque des revendications 1 à 4 caractérisée en ce que le matériau conducteur divisé est incorporé superficiellement dans une bande latérale (4) de matériau thermofusible.

6) Procédé de raccordement d'une première chape d'étanchéité (1) du type comportant au moins une couche extérieure de matériau thermofusible dans laquelle est incorporé superficiellement un matériau conducteur divisé avec une deuxième chape d'étanchéité (2) comportant au moins une couche extérieure d'un matériau thermofusible, la première et la seconde chapes se recouvrant partiellement, consistant à provoquer l'échauffement du matériau conducteur divisé par application d'un champ haute fréquence au niveau des zones de recouvrement (3).

7) Procédé de fixation sur un support d'une chape d'étanchéité du type comportant au moins une couche extérieure d'un matériau thermofusible dans laquelle est incorporé superficiellement un matériau conducteur divisé consistant à diviser la couche thermofusible comportant un conducteur divisé en dispersion contre le support et à provoquer l'échauffement du matériau conducteur par induction d'un courant haute fréquence.

8) Procédé selon l'une quelconque des revendications 6 ou 7 caractérisé en ce que l'on asservit la vitesse de déplacement du moyen d'induction d'un courant haute fréquence à la puissance absorbée.

9) Dispositif soudeur pour la fixation sur un support ou le raccordement avec une seconde chape d'étanchéité (2) d'une chape d'étanchéité comportant au moins une couche extérieure constituée d'un matériau thermofusible dans laquelle est incorporé un conducteur divisé caractérisé en ce qu'il comporte un générateur de champ haute fréquence alimentant un inducteur (13).

10) Dispositif soudeur selon la revendication 9 caractérisé en ce qu'il comporte en outre un capteur (14) disposé à proximité de l'inducteur (13), délivrant un signal à un comparateur (15), ledit compatateur (15) délivrant un signal de contrôle de la vitesse de déplacement du dispositif soudeur, ledit signal dépendant d'une part de la puissance délivrée par le générateur haute fréquence et d'autre part du signal délivré par le capteur (14).

FIG. 1

FIG. 2